(19) **Europäisches Patentamt / European Patent Office / Office européen des brevets**

(11) **EP 1 469 648 B1**

(12) **EUROPEAN PATENT SPECIFICATION**

(45) Date of publication and mention
of the grant of the patent:
**02.05.2007 Bulletin 2007/18**

(51) Int Cl.:
**H04L 27/26** (2006.01)

(21) Application number: **04251703.7**

(22) Date of filing: **24.03.2004**

(54) **Selective mapping in a multicarrier system**

Selectives Mapping in einem Mehrträgersystem

Mappage sélectif dans un système multiporteuse

(84) Designated Contracting States:
**AT BE BG CH CY CZ DE DK EE ES FI FR GB GR HU IE IT LI LU MC NL PL PT RO SE SI SK TR**

(30) Priority: **15.04.2003 GB 0308701**

(43) Date of publication of application:
**20.10.2004 Bulletin 2004/43**

(73) Proprietor: **Nokia Corporation**
**02150 Espoo (FI)**

(72) Inventor: **Kybett, Richard**
**Camberley,**
**Surrey GU16 6LZ (GB)**

(74) Representative: **Slingsby, Philip Roy et al**
**Page White & Farrer**
**Bedford House**
**John Street**
**London, WC1N 2BF (GB)**

(56) References cited:
**US-A- 6 125 103**

- **MULLER S H ET AL: "A comparison of peak power reduction schemes for OFDM" GLOBAL TELECOMMUNICATIONS CONFERENCE, 1997. GLOBECOM '97., IEEE PHOENIX, AZ, USA 3-8 NOV. 1997, NEW YORK, NY, USA,IEEE, US, 3 November 1997 (1997-11-03), pages 1-5, XP010254553 ISBN: 0-7803-4198-8**

- **BREILING M ET AL: "DISTORTIONLESS REDUCTION OF PEAK POWER WITHOUT EXPLICIT SIDE INFORMATION" GLOBECOM'00. 2000 IEEE GLOBAL TELECOMMUNICATIONS CONFERENCE. SAN FRANCICO, CA, NOV. 27 - DEC. 1, 2000, IEEE GLOBAL TELECOMMUNICATIONS CONFERENCE, NEW YORK, NY : IEEE, US, vol. VOL. 3 OF 3, 27 November 2000 (2000-11-27), pages 1494-1498, XP001195682 ISBN: 0-7803-6452-X**

- **MUELLER S H ET AL: "OFDM WITH REDUCED PEAK-TO-AVERAGE POWER RATIO BY MULTIPLE SIGNAL REPRESENTATION REDUCTION DU FACTEUR DE CRETE EN OFDM PAR REPRESENTATION MULTIPLE DU SIGNAL" ANNALES DES TELECOMMUNICATIONS - ANNALS OF TELECOMMUNICATIONS, PRESSES POLYTECHNIQUES ET UNIVERSITAIRES ROMANDES, LAUSANNE, CH, vol. 52, no. 1/2, February 1997 (1997-02), pages 58-67, XP000991143 ISSN: 0003-4347**

- **JAYALATH A D S ET AL: "REDUCED COMPLEXITY PTS AND NEW PHASE SEQUENCES FOR SLM TO REDUCE PAP OF AN OFDM SIGNAL" VTC 2000-SPRING. 2000 IEEE 51ST. VEHICULAR TECHNOLOGY CONFERENCE PROCEEDINGS. TOKYO, JAPAN, MAY 15-18, 2000, IEEE VEHICULAR TECHNOLGY CONFERENCE, NEW YORK, NY : IEEE, US, vol. VOL. 3 OF 3. CONF. 51, 15 May 2000 (2000-05-15), pages 1914-1917, XP000968337 ISBN: 0-7803-5719-1**

**Description**

This invention relates to forming multi-carrier signals, and especially to techniques for reducing the peak-to-average power ratio of such signals. The invention is especially applicable to the EDGE (enhanced data for GSM evolution) system.

Transmitters for transmitting signals typically include a signal generation section which generates the signal that is to be transmitted, and an amplification section which amplifies the signal for transmission by using a power amplifier (PA). When operating a linearised transmitter it is only possible to linearise up to the saturated output power of the PA being used; beyond this no more power is available and the linearised system will act like a hard limited system. Clipping the peaks of a varying envelope signal (such as any multi-carrier signal) will cause distortion and spectral spreading, with the potential to cause a significant error vector magnitude (EVM). In the case of an EDGE modulated system this will result in intermodulation distortion (IMD), but there is a very tight limit on intermodulation distortion of -70dBc, as specified in GSM 0505. As a result, clipping is of limited use.

In order to avoid clipping and failure to meet the above IMD requirement it is generally necessary that any amplifier used has a peak power capability equal to the level of the expected signal peaks. This has two major implications:

i) The size of the amplifier (and therefore the cost of the silicon on which it is typically formed) is set by the peak power requirement, not the average. Therefore, selecting an amplifier that meets the peak power requirement requires a larger amplifier than would otherwise be called for.

ii) The efficiency of the amplifier will be based on an average power which is backed off from saturation by an amount at least equal to the PAR (peak-to-average ratio), and will therefore not be optimum.

From these 2 points it can be seen that a large PAR will result in a large expensive amplifier that is running inefficiently, and it is for this reason that PAR reduction techniques are used wherever possible.

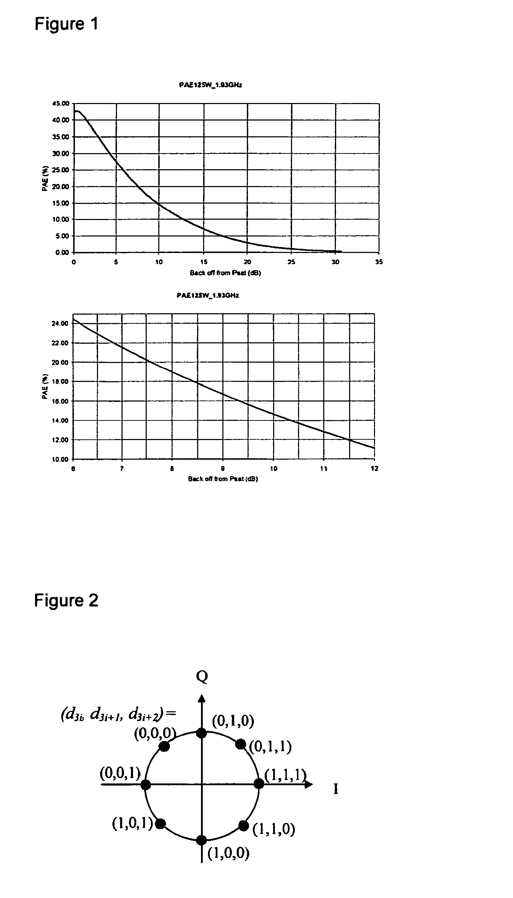

Figure 1 shows the PAR of a high power class AB LDMOS amplifier (Psat>400W) at ranges of back-off from saturation power (Psat). The figure shows that the amplifier has a power added efficiency of over 40% when operating at full saturated power, whereas at a back off of 9dB the efficiency has dropped to approx 17%. Although the slope of the efficiency curve can be adjusted somewhat for different amplifier designs, as long as a class AB (linear) amplifier is used then the slope will reduce as back off from Psat increases. For example, in comparison to the curve above a 1dB improvement in PAR from 9dB to 8dB would result in an efficiency improvement from 17% to 19% and a peak power requirement, for a 32W (45dBm) average power transmitter, from 252W to 200W. This could save $72 per amplifier, assuming a cost of $1.4 per watt).

Peak to average ratio is a problem in all varying envelope modulation systems. Baseband clipping has long been used to limit the maximum peaks of signals in such systems.

The trade off between PAR reduction and peak code domain error is the limiting factor in how far the peaks can be reduced. This subject has been well documented and is not be discussed here.

In a multi-carrier EDGE system the carriers are added together, not in the baseband but in the RF domain (at least some frequency shift must be applied to achieve carrier separation, even in the digital domain), therefore the multi-carrier high PAR signal does not exist until after the baseband pulse shaping filters. This distinction means that any spectral spreading or distortion caused by clipping the signal cannot be recovered by the pulse shaping filters.

US 6,125,103 discloses a method for reducing signal peaks in a transmitted signal by generating several alternative information-equivalent sequences and selecting the most favourable sequence :for transmission. The information-equivalent sequences are generated by multiplication with a complex value to result in a phase rotation.

"A comparison of peak power reduction schemes for OFDM" by Muller S.H. et al discloses a similar method to that disclosed in US 6,125,103. Complex-valued rotation factors are used to generate a selection of phase-rotated carriers. A peak value optimisation is performed to choose the carriers for which the PAR is minimised.

There is therefore a need for an improved way to form signals so as to preferably to reduce the typical PAR and hence reduce the demands on the power amplifier of the transmitter.

According to one aspect of the present invention there is provided a method for forming a multi-carrier output signal for transmission in a communication system, the multi-carrier output signal being formed from a plurality of data signals each modulated with a respective one of a plurality of carrier signals, the method comprising establishing two or more sets of carrier signals, each set comprising each of the plurality of carrier signals and differing from the other set(s) in the phase of at least one of the carrier signals; determining the maximum amplitude of the multi-carrier output signal that would result from the use of a first set of carrier signals to form the multi-carrier signal, and if that maximum amplitude is above a predetermined threshold performing the steps of: (a) selecting the one of the sets of carrier signals that would, when used to form the multi-carrier signal, result in the multi-carrier output signal having the lowest maximum amplitude; and (b) forming the multi-carrier output signal from the plurality of data signals each modulated with the respective one of the plurality of carrier signals of that selected set; and otherwise: forming the multi-carrier output signal

EP 1 469 648 B1

from the plurality of data signals modulated with the respective one of the plurality of carrier signals of the first set.

According to a second aspect of the invention there is provided a transmitter for forming a multi-carrier output signal for transmission in a communication system, the multi-carrier output signal being formed from a plurality of data signals each modulated with a respective one of a plurality of carrier signals, the transmitter being configured to: establish two or more sets of carrier signals, each set comprising each of the plurality of carrier signals and differing from the other set(s) in the phase of at least one of the carrier signals determine the maximum amplitude of the multi-carrier output signal that would result from the use of a first set of carrier signals to form the multi-carrier signal; determine the maximum amplitude of the multi-carrier output signal that would result from the use of a first set of carrier signals to form the multi-carrier signal, and if that maximum amplitude is above a predetermined threshold: (a) select the one of the sets of carrier signals that would, when used to form the multi-carrier signal, result in the multi-cartier output signal having the lowest maximum amplitude; and (b) form the multi-carrier output signal from the plurality of data signals each modulated with the respective one of the plurality of carrier signals of that selected set; and otherwise: form the multi-carrier output signal from the plurality of data signals modulated with the respective one of the first set.

According to a third aspect of the invention there is provided a method for forming a multi-carrier output signal for transmission in a communication system, the multi-carrier output signal for transmission in a communication system, the multi-carrier output signal being formed from a plurality of data signals each modulated with a respective one of a plurality of carrier signals, the method comprising: establishing a set of carrier signals; determining the maximum amplitude of the multi-carrier signal that would result from modulating each of the plurality of data signals with the respective one of the plurality of carrier signals of that set; and if the determined maximum amplitude is below a pre-determined threshold, forming the multi-carrier signal by modulating each of the plurality of data signals with the respective one of the plurality of carrier signals of that set; and otherwise; altering the phase of at least one of the carrier signals of the set, and forming the multi-carrier signal by modulating each of the plurality of data signals with the respective one of the plurality of carrier signals of the set, including the at least one carrier signal having an altered phase.

Preferably the said step of establishing comprises: forming a first set of the plurality of carrier signals; and forming the or each other set of the plurality of carrier signals by duplicating a previously formed set of the carrier signals but with the phase of one or more of the carrier signals altered by a random amount. The random amount may be a pseudo-random amount.

Preferably the said step of establishing comprises: forming a first set of the plurality of carrier signals; and forming the or each other set of the plurality of carrier signals by duplicating a previously formed set of the carrier signals but with the phase of one or more of the carrier signals altered by a pre-determined amount. The pre-determined amount may be selected from a set of predetermined amounts. The set of predetermined amounts may be integer multiples of a single amount. Most preferably the set of predetermined amounts comprises one or more of the values: $\pi/2$, $\pi$, $3\pi/2$. This allows a simple implementation since multiplications by only 1 and - 1 may be used to perform those phase rotations.

Preferably the said step of selecting comprises: for each of the sets of carrier signals: forming a multi-carrier signal by modulating each of the data signals with the respective carrier signal of that set, combining the modulated signals and determining the maximum amplitude of the combined signal. Alternatively, the maximum amplitude may be determined by simulation.

Preferably the method comprises repeatedly forming one of the said sets of carrier signals and determining the maximum amplitude that the multi-carrier output signal would have if that set of carrier signals were used to form the multi-carrier signal, until the determined maximum amplitude is below a predetermined threshold. If none of a predetermined number of formed sets would result in the determined maximum amplitude being below the threshold then the one of those sets that would result in the lowest maximum amplitude may be selected.

The communication system may be GSM, WCDMA or EDGE communication system. Alternatively, it may be a system of another type.

The multi-carrier output signal is suitably a burst of the communication system. Alternatively it may be a longer or shorter signal block. Suitably the said selecting and forming steps are performed for each burst or other block. The said establishing step may be performed for each burst or other block or for several bursts/blocks.

Each of the data signals could comprise more or fewer than 100 symbols.

The method may comprise amplifying the multi-carrier output signal and transmitting the amplified signal via an antenna. Preferably the signal is amplified by means of a linear power amplifier.

The present invention will now be described by way of example, with reference to the accompanying drawings.

In the drawings:

figure 1 shows the PAR of a high power class AB LDMOS amplifier;
figure 2 shows the EDGE symbol mapping scheme;
figure 3 illustrates the EDGE 3pi/8 offset scheme;
figure 4 shows the EDGE constellation diagram;
figure 5 shows the results of some simulations plotting PAR against time;

figure 6 shows the results of a modulation phase alteration algorithm; and
figure 7 shows apparatus for performing the phase alteration algorithm.

The modulation used in the EDGE system is specified in section 3 of the GSM 0504 standard document. It involves the following steps:

1) Symbol mapping

Three data bits are combined using a Gray code to form an 8psk symbol. The conversion from modulating bits to symbols is performed according to the following table.

| Modulating bits d3i, d3i+1, d3i+2 | Symbol parameter I |
|---|---|
| (1,1,1) | 0 |
| (0,1,1) | 1 |
| (0,1,0) | 2 |
| (0,0,0) | 3 |
| (0,0,1) | 4 |
| (1,0,1) | 5 |
| (1,0,0) | 6 |
| (1,1,0) | 7 |

The symbols are then mapped according to the scheme illustrated in figure 2.

2) Symbol rotation

The symbols are continuously rotated by a 3pi/8 offset defined by

$$\hat{s}_i = s_i \cdot e^{ji3\pi/8}$$

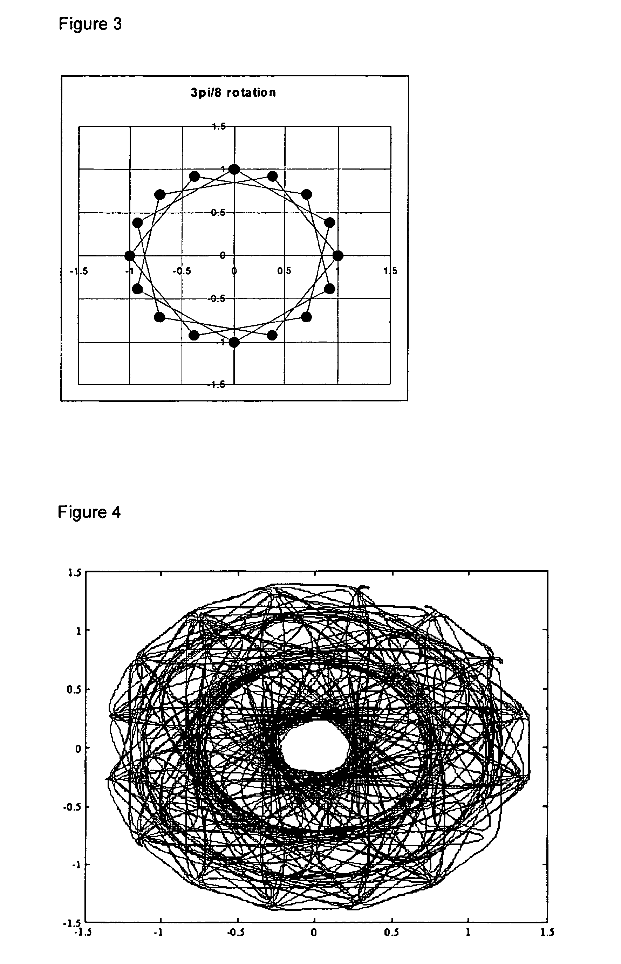

This is illustrated in figure 3.

3) Pulse shaping

The signal is then pulse shaped by a filter approximating the GSM system's general Gaussian spectral response. This results in a constellation diagram as shown in figure 4.
As a result of these steps a single carrier EDGE modulated signal has a PAR of approx 3.1dB. For a multi-carrier EDGE signal, the worst-case PAR depends on the number of carriers. Typically, the worst case PAR of multi-carrier signals are as follows :

2 carrier = 3dB
4 carrier = 6dB
8 carrier = 9dB

If each of the carriers have EDGE modulation on them with a 3.1 dB PAR of its own then the worst-case PAR figures become:

2 carrier = 6.1dB
4 carrier = 9.1dB
8 carrier = 12.1dB

In order for a worst-case peak power to occur in practice in a multi-carrier system, it must happen that:

i) the modulation of the individual carrier signals must be at a peak amplitude; and at the same time
ii) the RF carriers (or separation frequency) must be of the same phase at the same time.

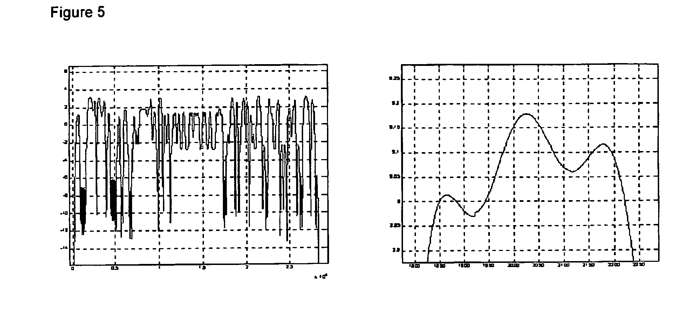

An EDGE symbol lasts 3.69ms and peaks over 3dB can be observed lasting approx 4.8ms (250 clock cycles @ 52MHz sample). To illustrate this, figure 5 shows the results of some simulations plotting PAR against time.
The statistical probability of certain peak powers occurring for multiple carrier EDGE signals has been analysed. Based on these results, the PARs that would be reached with a probability of 0.1% are:

2 carrier = 6.3
4 carrier = 8dB
8 carrier = 8.5dB
16 carrier = 9dB

(In comparison the EDGE single-carrier PAR for this simulation was 3.6dB). These figures are considerably less than the worst-case figures, and more statistical improvement results as the number of carriers increases.
In reality the different EDGE signals will be floated on an IF frequency equal to their carrier separation. The phases of the different signal will therefore not be constant relative to each other.
As number of carriers increase the probability of the separation frequency carriers aligning to form a peak is reduced. Simulations using multiple sine waves with a 600kHz spacing indicate that the probability of a 4 carrier signal reaching its worst case is quite high (0.1%). As the number of carriers goes up the probability of a worst-case combination becomes lower, in this case with 500 timeslots worth of data the maximum value for 8 carrier is approx. 8.5dB and approx. 9.5dB for 16 carrier.
Section 3.3 of GSM 05.04 states:

"Before the first bit of the bursts as defined in GSM 05.02 enters the modulator, the state of the modulator is undefined. Also after the last bit of the burst, the state of the modulator is undefined. The tail bits (see GSM 05.02) define the start and the stop of the active and the useful part of the burst as illustrated in figure 3. Nothing is specified about the actual phase of the modulator output signal outside the useful part of the burst."

This makes sense as the mobile recovers its phase information relative to the training sequence in the middle of the burst. The inventors of the present invention have identified that this specification leaves it open to a designer to change the phase at the start of the burst to any arbitrary value, and that this could advantageously be exploited to allow an improvement in efficiency.
Each EDGE burst can be regarded as an isolated event. As outlined above, the largest peak to average ratios are statistically rare; and so the probability of a peak occurring due to modulated signals adding to give a high PAR in any one multi-carrier burst is low. However, if a coincidence of signals that could add to cause such a peak were detected before the signal is passed to the power amplifier, such addition could be avoided by varying the phase of one or more of the carriers which would otherwise cause the peak. This technique is described in more detail below.
The signal under evaluation can be modelled as a complex envelope:

$$y(t) = \sum_{i=1}^{no.\_of\_carriers} A(t,i)e^{(j\omega_i t + \phi_i)}$$

where A(t,i) is the term defined by modulation and $e^{(j\omega_i t + \phi_i)}$ describes the frequency location of single carrier signal within the multi-carrier band and the phase offset between them. The goal is to minimise the peak-to-mean ratio (PAR) of the transmitted signal.

$$PAR = \sqrt{\frac{\max\left(\left|y(t)\right|^2\right)}{\sqrt{mean\left(\left|y(t)\right|^2\right)}}}$$

In accordance with the signal model defined in previous section, there are several options for reducing the PAR of the output signal. First, the terms A(t,i) can be modified so that the PAR is minimised. In this case the term "clipping" is appropriate, as the modification creates an error (EVM) in the output signal. Alternatively, one can adjust the frequency $\omega_i$ terms of each carrier, but this causes a frequency error to the transmitted signal and it is limited by the specifications in and EDGE environment. A third option is to adjust the phase offset $\phi_i$ of each carrier. In case the adjustment is done on a burst-by-burst basis, it doesn't cause any error to the transmitted signal and therefore it is considered as an alternative or supporting option for clipping algorithms.

Using an embodiment of the present technique, bursts where large peaks could occur are identified and the starting phase of one or more of the modulators is manipulated when one or more of the channels forming the burst are modulated, so as to avoid the peak occurring. The phase(s) of the carriers during a burst is (are) changed between bursts and held throughout the length of he burst in question. At the end of the burst the phase(s) may be changed again, or kept the same.

Numerous specific embodiments are available to reduce the peak amplitude. In general, two or more sets of the carrier signals that could (according to the standard for the communication system in question) be used to modulate a burst are established, and the one that would result in the lowest maximum amplitude for the signal that would result when the modulated signals are combined is selected for use.

In one embodiment, all the sets may be established and the one that would result in the lowest maximum amplitude is selected. In another embodiment, a pre-determined threshold is set for an acceptable maximum amplitude for a burst. Sets are established in turn and once a set is found that would result in the burst having a maximum amplitude below that threshold that burst is selected. It may sometimes happen that the first set to be selected satisfies the threshold, but on other iterations several sets may have to be tried. It may be necessary to set a maximum on the number of tries to be used, so as to keep the processing required within available bounds. Once that number of tries has been made the set that would have resulted in the lowest peak amplitude can be selected.

The establishment of the sets can be done in any convenient way. For example, it may be done by randomly altering the phase of one or more of the carrier signals. Alternatively, it may be done by deterministically altering the phase of one or more of the carrier signals. In one preferred embodiment, the phase alterations that are available are limited any one or more of $\pi/2$, $\pi$, and $3\pi/2$. These rotations can be performed using only multiplications by 1 and -1, making them particularly convenient to perform. A rotation of 0 (no alteration) also satisfies this condition.

Which of the sets would result in the lowest maximum amplitude may be determined by performing the modulation measuring the maximum amplitude that results, and comparing the determined maxima; or by simulation.

The maximum may be an absolute maximum, or may be the peak to average ratio.

One example of an algorithm to implement the technique involves measuring the PAR for a multi-carrier burst and, if a certain level of PAR is recorded, giving the modulators are given an alternative random starting phase. This is a relatively simplistic algorithm for removing the peaks and is computationally somewhat intensive. More sophisticated algorithms could simply adjust the starting phase of a subset of the channels, and the offset could be determined in a coordinated fashion rather than randomly.

It should be noted that as the probability of a peak PAR occurring in any burst is low, it is acceptable to simply implement a random adjustment of the phase(s). Having changed the phase of the carriers to avoid one peak the probability of another occurring in the same burst is low.

The phase of the individual carriers relative to each other can be adjusted by varying the phase of the 3pi/8 phase rotation of the EDGE modulator. Other means for adjusting the phase could be used in other systems.

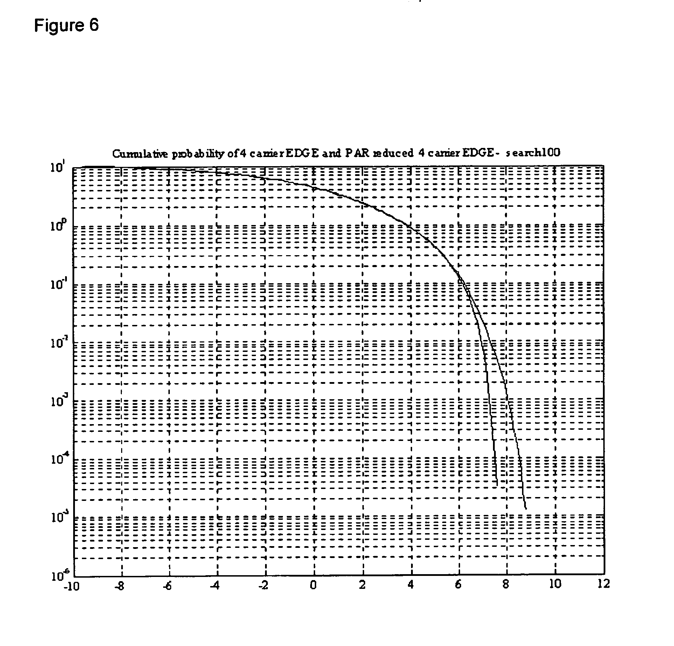

Figure 6 illustrates the results of a simulation using the relatively simplistic algorithm described above. The results even for this algorithm show that for a 0.01% probability the peak to average ratio has reduced from 8dB to approx 7dB, a 1dB improvement. Using the example amplifier described with reference to figure 1 this would result in an efficiency improvement from 18% to 21.5% (3.5% improvement), and a cost saving of $56 (200W to 160W peak power for 32W average and assuming $1.4/W).

As the present technique is essentially predictive, and has to implement any phase rotations to the signal at the start of the RF burst, it requires the identification of a potential peak to be to done at least 1 timeslot in advance of the potential peak, so that corrective action taken in time. If such a delay is tolerable in the modulator of a potential installation then the technique may be implemented there alone. Otherwise, additional processing downstream of the modulator is called for.

In the coding process there is a considerable delay introduced into the link by the interleaving process. For a traffic channel this is done on a cycle of 114*4 = 456 data bits which are spread over 8 half timeslots and transmitted over 8 frames. The total transmission delay including an additional SCCH channel from the 1st burst to the last one in a block being (9*8)-7 = 65 bursts period or 37.5ms. (See "GSM System for mobile Communications"; M Mouley, M Pautet Section 4.3.2).

At this point the information required to carry out the prediction is available and could be processed without any additional delay to the signal. The pre-distortion algorithms could then pass an appropriate starting phase for each burst to the modulator. In order to do the prediction correctly the interleaver of each physical channel should be able to share information about the different channels (including the channel number).

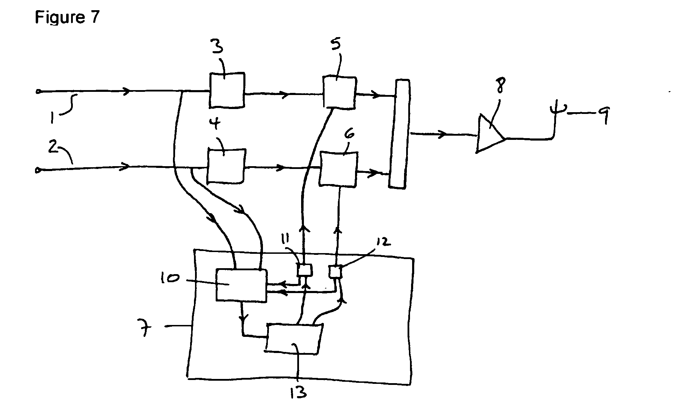

Figure 7 shows schematically an apparatus for performing the present technique. The apparatus of figure 7 is for processing data from two channels, received by the apparatus at 1 and 2. The incoming data is delayed by respective delay units 3 and 4 to allow time for processing that occurs in block 7, and is then passed to respective modulators 5 and 6. At the modulators the incoming data streams are modulated burst-by-burst. The phase of each modulator is set by processing block 7. The outputs of the modulators are combined to form a multi-channel signal which is amplified by power amplifier 8 and then transmitted via antenna 9.

At processing block 7 includes a signal simulation unit 10 and stores 11, 12 which store the current phases of the modulators 5, 6. When the data representing a burst is received at 1, 2 the signal simulation unit simulates the multi-carrier signal that will result from the modulation of that data using the current phases of the modulators. The simulated multi-carrier signal is passed to a decision unit 13. If the PAR of the simulated multi-carrier signal does not go over a pre-set threshold then the decision unit takes no further action. If the PAR does exceed the threshold then the decision unit randomly changes the phases stored at 11 and 12 and passes the new phases to the modulators for use by them in modulating the current burst. The delay unit imposes a delay such that once this processing has been done the data for the burst is passed to the modulators for modulation according to the set phases.

The statistical trade-off between a low level of clipping and the average power level of the distortion products that are caused by it has been investigated. Soft clipping to reduce spectral distortion is also a possibility.

As indicated above, it is known that a signal with high PAR sets high demands on power amplifier linearity and therefore reduces achievable power efficiency and therefore increases the power consumption of the power amplifier. In order to improve the efficiency, algorithms are searched to reduce the peak-to-mean ratio of the transmitted signal. Clipping algorithms provide one method to for reducing the PAR with a cost of increasing the Error Vector Magnitude (EVM) of transmitted signal. Different clipping algorithms have already been studied in the case of a WCDMA signal and in accordance with the results some algorithms have been proposed for implementation.

Some algorithms for reducing the PAR will now be presented.

The characteristics of multi-carrier EDGE (8-PSK) signal are studied next and some limitations for the clipper performance are considered.

The PAR of one EDGE modulated signal is about 3.2 dB. Theoretically, in the case of a multi-carrier signal, the PAR is increased by 3 dB every time the number of carriers is doubled. On the other hand, according to the central-limit-theorem, the sum of large amount of random signals approaches signal with according to a Gaussian function and therefore the amplitude distribution of multi-carrier signal approaches the Rayleigh distribution as the amount of carriers increases. This is an acceptable approximation of the transmitted signal already with, say, 8 carriers and is used here due to its simplicity.

In this section some algorithms for adjusting the initial phase of a burst are considered. As indicated above, the initial phase adjustment has to be made before the actual modulation of the burst starts.

For comparison, two phase-setting algorithms were evaluated for the case of 8 carriers. The first involves restricting the phase resolution to 90 degrees and considering the optimum phase combination of four input signals. In the case of 8 input signals, pairs of signals are summed in random phase to form four signals. For the resulting four signals all combinations are created and the best is selected.

The second algorithm that has been studied sums two second signal to the first one with the best phase (using a selected resolution, here 45 degrees). After this, third one is added to the combination of the previous two signals, and so on for the other carriers.

In practice, the required frequency characteristics can be created by filtering an impulse with a filter bank each filter having the response of each sub-carrier.

The present invention is not limited to use in a GSM/EDGE system.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

**Claims**

1. A method for forming a multi-carrier output signal for transmission in a communication system, the multi-carrier output signal being formed, the method comprising:

   establishing two or more sets of carrier signals, each set comprising each of the plurality of carrier signals and differing from the other set(s) in that the phase of at least one of the carrier signals is different; **characterised by**:

   determining the maximum amplitude of the multi-carrier output signal that would result from the use of a first set of said sets of carrier signals to form the multi-carrier signal, and if that maximum amplitude is above a predetermined threshold performing the steps of:

   (a) selecting one of the sets of carrier signals that would, when used to form the multi-carrier signal, result in the multi-carrier output signal having the lowest maximum amplitude; and
   (b) forming the multi-carrier output signal by modulating each of a plurality of carrier signals by a respective one of a plurality of data signals of that selected set of carrier signals;

   otherwise:

   forming the multi-carrier output signal by modulating each of a plurality of carrier signals by a respective one of a plurality of data signals of the first set of carrier signals.

2. A method as claimed in claim 1, wherein the said step of establishing comprises:

   forming a first set of the plurality of carrier signals; and
   forming the other set, or, each of the other sets of the plurality of carrier signals by duplicating a previously formed set of the carrier signals but with the phase of one or more of the carrier signals altered by a random amount .

3. A method as claimed in claim 1, wherein the said step of establishing comprises:

   forming a first set of the plurality of carrier signals; and
   forming the other set, or, each of the other sets, of the plurality of carrier signals by duplicating a previously formed set of the carrier signals but with the phase of one or more of the carrier signals altered by a pre-determined amount.

4. A method as claimed in claim 3, wherein the pre-determined amount is selected from a set of predetermined amounts.

5. A method as claimed in claim 4, wherein the set of predetermined amounts comprises one or more of the values: $\pi/2$, $\pi$, $3\pi/2$.

6. A method as claimed in any preceding claim, wherein the said step of selecting comprises:

   for each of the sets of carrier signals: forming a multi-carrier signal by modulating each of the data signals with the respective carrier signal of that set, combining the modulated signals and determining the maximum amplitude of the combined signal.

7. A method as claimed in any preceding claim, comprising repeatedly forming one of the said sets of carrier signals and determining the maximum amplitude that the multi-carrier output signal would have if that set of carrier signals were used to form the mum-carrier signal, until the determined maximum amplitude is below a predetermined threshold.

8. A method as claimed in any preceding claim, wherein the communication system is a GSM, WCDMA or EDGE communication system.

9. A method as claimed in any preceding claim, wherein the multi-carrier output signal is a burst of the communication system.

10. A method as claimed in any preceding claim, wherein each of the data signals comprises more than 100 symbols.

11. A method as claimed in any preceding claim, comprising amplifying the multi-carrier output signal and transmitting the amplified signal via an antenna.

12. A method as claimed in claim 11, where the signal is amplified by means of a linear power amplifier.

13. A transmitter for forming a multi-carrier output signal for transmission in a communication system, the multi-carrier output signal being formed, the transmitter being configured to:

establish two or more sets of carrier signals, each set comprising each of the plurality of carrier signals and differing from the other set(s) in that the phase of at least one of the carrier signals is different; **characterised in that** the transmitter is configured to:

determine the maximum amplitude of the multi-carrier output signal that would result from the use of a first set of said sets of carrier signals to form the multi-carrier signal, and if that maximum amplitude is above a predetermined threshold:

(a) select one of the sets of carrier signals that would, when used to form the multi-carrier signal, result in the multi-carrier output signal having the lowest maximum amplitude; and
(b) form the multi-carrier output signal by modulating each of a plurality of carrier signals by a respective one of a plurality of data signals of that selected set of carrier signals;

otherwise:

form the multi-carrier output signal by modulating each of a plurality of carrier signals by a respective one of a plurality of data signals of the first set of carrier signals.

14. A method for forming a multi-carrier output signal for transmission in a communication system, the multi-carrier output signal being formed by modulating each of a plurality of carrier signals by a respective one of a plurality of data signals, the method comprising:

establishing a set of carrier signals;
determining the maximum amplitude of the multi-carrier signal that would result from modulating each of the plurality of carrier signals of that set by a respective one of the plurality of data signals; and
if the determined maximum amplitude is below a pre-determined threshold, forming the multi-carrier signal by modulating each of the plurality of carrier signals of that set by a respective one of the plurality of data signals; otherwise;
altering the phase of at least one of the carrier signals of the set, and forming the multi-carrier signal by modulating each of the plurality of carrier signals of that set by a respective one of the plurality of data signals, including the at least one carrier signal having an altered phase.

**Patentansprüche**

1. Verfahren zum Bilden eines Mehrträgerausgangssignals zur Übertragung in einem Kommunikationssystem, wobei das Mehrträgerausgangssignal durch Modulation von jedem einer Vielzahl von Trägersignalen mit einem jeweiligen einer Vielzahl von Datensignalen gebildet wird, mit den Schritten:

Einrichten von zwei oder mehr Sätzen von Trägersignalen, wobei jeder Satz jedes der Vielzahl von Trägersignalen aufweist und sich von dem/den anderen Satz/Sätzen darin unterscheidet, dass die Phase von zumindest einem der Trägersignale unterschiedlich ist; **gekennzeichnet durch**:

Bestimmen der maximalen Amplitude des Mehrträgerausgangssignals, das sich aus der Verwendung von einem ersten Satz der Sätze von Trägersignalen zum Bilden des Mehrträgersignals ergeben würde, und, wenn die maximale Amplitude oberhalb eines vorbestimmten Schwellenwerts liegt, Durchführen der Schritte:

(a) Auswählen von einem der Sätze von Trägersignalen, der, wenn er zum Bilden des Mehrträgersignals verwendet wird, das Mehrträgerausgangssignal ergeben würde, das die niedrigste maximale Amplitude aufweist; und
(b) Bilden des Mehrträgerausgangssignals **durch** Modulation von jedem einer Vielzahl von Trägersignalen von diesem ausgewählten Satz von Trägersignalen mit einem jeweiligen einer Vielzahl von Datensignalen;

anderenfalls:

Bilden des Mehrträgerausgangssignals **durch** Modulation von jedem einer Vielzahl von Trägersignalen von dem ersten Satz von Trägersignalen mit einem jeweiligen einer Vielzahl von Datensignalen.

2. Verfahren gemäß Anspruch 1, wobei der Einrichtungsschritt aufweist:

Bilden eines ersten Satzes der Vielzahl von Trägersignalen; und
Bilden des anderen Satzes oder jedes der anderen Sätze der Vielzahl von Trägersignalen durch Duplizieren eines vorhergehend gebildeten Satzes der Trägersignale, wobei aber die Phase von einem oder mehreren der Trägersignale um einen zufälligen Betrag geändert wird.

3. Verfahren gemäß Anspruch 1, wobei der Einrichtungsschritt aufweist:

Bilden eines ersten Satzes der Vielzahl von Trägersignalen; und
Bilden des anderen Satzes oder jedes der anderen Sätze der Vielzahl von Trägersignalen durch Duplizieren eines vorhergehend gebildeten Satzes der Trägersignale, wobei aber die Phase von einem oder mehreren der Trägersignale um einen vorbestimmten Betrag geändert wird.

4. Verfahren gemäß Anspruch 3, wobei der vorbestimmte Betrag aus einer Menge von vorbestimmten Beträgen ausgewählt wird.

5. Verfahren gemäß Anspruch 4, wobei die Menge von vorbestimmten Beträgen einen oder mehrere der Werte $\pi/2$, $\pi$, $3\pi/2$ aufweist.

6. Verfahren gemäß einem der vorhergehenden Ansprüche, wobei der Auswahlschritt aufweist:

Bilden, für jeden der Sätze von Trägersignalen, eines Mehrträgersignals durch Modulation von jedem der Datensignale mit dem jeweiligen Trägersignal von diesem Satz, Kombination der modulierten Signale und Bestimmung der maximalen Amplitude des kombinierten Signals.

7. Verfahren gemäß einem der vorhergehenden Ansprüche, mit einem wiederholten Bilden von einem der Sätze von Trägersignalen und Bestimmen der maximalen Amplitude, die das Mehrträgerausgangssignal aufweisen würde, falls dieser Satz von Trägersignalen zum Bilden des Mehrträgersignals verwendet wird, bis die bestimmte maximale Amplitude unterhalb eines vorbestimmten Schwellenwerts liegt.

8. Verfahren gemäß einem der vorhergehenden Ansprüche, wobei das Kommunikationssystem ein GSM-, ein WCDMA- oder ein EDGE-Kommunikationssystem ist.

9. Verfahren gemäß einem der vorhergehenden Ansprüche, wobei das Mehrträgerausgangssignal ein Übertragungsblock des Kommunikationssystems ist.

10. Verfahren gemäß einem der vorhergehenden Ansprüche, wobei jedes der Datensignale mehr als 100 Symbole aufweist.

11. Verfahren gemäß einem der vorhergehenden Ansprüche, mit einem Verstärken des Mehrträgerausgangssignals und einem Übertragen des verstärkten Signals über eine Antenne.

**12.** Verfahren gemäß Anspruch 11, wobei das Signal mit Hilfe eines linearen Leistungsverstärkers verstärkt wird.

**13.** Sender zum Bilden eines Mehrträgerausgangssignals zur Übertragung in einem Kommunikationssystem, wobei das Mehrträgerausgangssignal durch Modulation von jedem einer Vielzahl von Trägersignalen mit einem jeweiligen einer Vielzahl von Datensignalen gebildet wird, wobei der Sender konfiguriert ist zum:

Einrichten von zwei oder mehr Sätzen von Trägersignalen, wobei jeder Satz jedes der Vielzahl von Trägersignalen aufweist und sich von dem/den anderen Satz/Sätzen darin unterscheidet, dass die Phase von zumindest einem der Trägersignale unterschiedlich ist; **dadurch gekennzeichnet, dass** der Sender konfiguriert ist zum:

Bestimmen der maximalen Amplitude des Mehrträgerausgangssignals, das sich aus der Verwendung von einem ersten Satz der Sätze von Trägersignalen zum Bilden des Mehrträgersignals ergeben würde, und, wenn die maximale Amplitude oberhalb eines vorbestimmten Schwellenwerts liegt:

(a) Auswählen von einem der Sätze von Trägersignalen, der, wenn er zum Bilden des Mehrträgersignals verwendet wird, das Mehrträgerausgangssignal ergeben würde, das die niedrigste maximale Amplitude aufweist; und
(b) Bilden des Mehrträgerausgangssignals durch Modulation von jedem einer Vielzahl von Trägersignalen von diesem ausgewählten Satz von Trägersignalen mit einem jeweiligen einer Vielzahl von Datensignalen;

anderenfalls:

Bilden des Mehrträgerausgangssignals durch Modulation von jedem einer Vielzahl von Trägersignalen von dem ersten Satz von Trägersignalen mit einem jeweiligen einer Vielzahl von Datensignalen.

**14.** Verfahren zum Bilden eines Mehrträgerausgangssignal zur Übertragung in einem Kommunikationssystem, wobei das Mehrträgerausgangssignal durch Modulation von jedem einer Vielzahl von Trägersignalen mit einem jeweiligen einer Vielzahl von Datensignalen gebildet wird, mit den Schritten:

Einrichten eines Satzes von Trägersignalen;
Bestimmen der maximalen Amplitude des Mehrträgersignals, das sich aus einer Modulation von jedem der Vielzahl von Trägersignalen von diesem Satz mit einem jeweiligen der Vielzahl von Datensignalen ergeben würde; und
Bilden des Mehrträgersignals durch Modulation von jedem der Vielzahl von Trägersignalen von diesem Satz mit einem jeweiligen der Vielzahl von Datensignalen, falls die bestimmte maximale Amplitude unterhalb eines vorbestimmten Schwellenwerts liegt; anderenfalls:

Ändern der Phase von zumindest einem der Trägersignale des Satzes und Bilden des Mehrträgersignals durch Modulation von jedem der Vielzahl von Trägersignalen von diesem Satz, einschließlich des zumindest einen Trägersignals, das eine geänderte Phase aufweist, mit einem jeweiligen der Vielzahl von Datensignalen.

## Revendications

**1.** Procédé pour former un signal de sortie multiporteuse pour une transmission dans un système de communication, le signal de sortie multiporteuse étant formé en modulant chacun de la pluralité de signaux porteurs par un signal respectif d'une pluralité de signaux de données, le procédé comprenant les étapes consistant à :

établir deux, ou plus, ensembles de signaux porteurs, chaque ensemble comprenant chacun de la pluralité de signaux porteurs et différant du/des autre(s) ensemble(s) en ce que la phase d'au moins un des signaux porteurs est différente, **caractérisé par** les étapes consistant à :

déterminer l'amplitude maximum du signal de sortie multiporteuse qui résulterait de l'utilisation d'un premier ensemble desdits ensembles de signaux porteurs pour former le signal multiporteuse et, si cette amplitude maximum est au-dessus d'un seuil prédéterminé, exécuter les étapes consistant à :

(a) sélectionner un des ensembles de signaux porteurs qui pourrait, lorsqu'il est utilisé pour former le signal multiporteuse, conduire au signal de sortie multiporteuse ayant l'amplitude maximum la plus basse ; et
(b) former le signal de sortie multiporteuse en modulant chacun de la pluralité de signaux porteurs par un signal respectif d'une pluralité de signaux de données de cet ensemble sélectionné de signaux porteurs ;

sinon,
former le signal de sortie multiporteuse en modulant chacun de la pluralité de signaux porteurs par un signal respectif d'une pluralité de signaux de données du premier ensemble de signaux porteurs.

**2.** Procédé tel que revendiqué dans la revendication 1, dans lequel ladite étape d'établissement comprend les étapes consistant à :

former un premier ensemble de la pluralité de signaux porteurs ; et
former l'autre ensemble ou, chacun des autres ensembles, de la pluralité de signaux porteurs en dupliquant un ensemble préalablement formé des signaux porteurs, mais avec la phase d'un ou de plusieurs des signaux porteurs altérée d'une quantité aléatoire.

**3.** Procédé tel que revendiqué dans la revendication 1, dans lequel ladite étape d'établissement comprend les étapes consistant à :

former un premier ensemble de la pluralité de signaux porteurs ; et
former l'autre ensemble ou, chacun des autres ensembles, de la pluralité de signaux porteurs en dupliquant un ensemble préalablement formé des signaux porteurs, mais avec la phase d'un ou de plusieurs des signaux porteurs altérée d'une quantité prédéterminée.

**4.** Procédé tel que revendiqué dans la revendication 3, dans lequel la quantité prédéterminée est sélectionnée dans un ensemble de quantités prédéterminées.

**5.** Procédé tel que revendiqué dans la revendication 4, dans lequel l'ensemble de quantités prédéterminées comprend une ou plusieurs des valeurs : $\pi/2$, $\pi$, $3\pi/2$.

**6.** Procédé tel que revendiqué dans l'une quelconque des revendications précédentes, dans lequel ladite étape de sélection comprend :

pour chacun des ensembles de signaux porteurs, les étapes consistant à : former un signal multiporteuse en modulant chacun des signaux de données avec le signal porteur respectif de cet ensemble, combiner les signaux modulés et déterminer l'amplitude maximum du signal combiné.

**7.** Procédé tel que revendiqué dans l'une quelconque des revendications précédentes, comprenant les étapes consistant à former de manière répétitive un desdits ensembles de signaux porteurs et à déterminer l'amplitude maximum que le signal de sortie multiporteuse aurait si cet ensemble de signaux porteurs était utilisé pour former le signal multiporteuse, jusqu'à ce que l'amplitude maximum déterminée soit inférieure à un seuil prédéterminé.

**8.** Procédé tel que revendiqué dans l'une quelconque des revendications précédentes, dans lequel le système de communication est un système de communication GSM, WCDMA ou EDGE.

**9.** Procédé tel que revendiqué dans l'une quelconque des revendications précédentes, dans lequel le signal de sortie multiporteuse est une salve du système de communication.

**10.** Procédé tel que revendiqué dans l'une quelconque des revendications précédentes, dans lequel chacun des signaux de données comprend plus de 100 symboles.

**11.** Procédé tel que revendiqué dans l'une quelconque des revendications précédentes, comprenant les étapes consistant à amplifier le signal de sortie multiporteuse et à transmettre le signal amplifié via une antenne.

**12.** Procédé tel que revendiqué dans la revendication 11, dans lequel le signal est amplifié au moyen d'un amplificateur de puissance linéaire.

**13.** Emetteur pour former un signal de sortie multiporteuse pour une transmission dans un système de communication, le signal de sortie multiporteuse étant formé en modulant chacun de la pluralité de signaux porteurs par un signal respectif d'une pluralité de signaux de données, l'émetteur étant configuré pour :

établir deux, ou plus, ensembles de signaux porteurs, chaque ensemble comprenant chacun de la pluralité de signaux porteurs et différant du/des autre(s) ensemble(s) en ce que la phase d'au moins un des signaux porteurs est différente, **caractérisé en ce que** l'émetteur est configuré pour :

déterminer l'amplitude maximum du signal de sortie multiporteuse qui résulterait de l'utilisation d'un premier ensemble desdits ensembles de signaux porteurs pour former le signal multiporteuse et, si cette amplitude maximum est au-dessus d'un seuil prédéterminé :

(a) sélectionner un des ensembles de signaux porteurs qui pourrait, lorsqu'il est utilisé pour former le signal multiporteuse, conduire au signal de sortie multiporteuse ayant l'amplitude maximum la plus basse ; et
(b) former le signal de sortie multiporteuse en modulant chacun de la pluralité de signaux porteurs par un signal respectif d'une pluralité de signaux de données de cet ensemble sélectionné de signaux porteurs ;

sinon,
former le signal de sortie multiporteuse en modulant chacun de la pluralité de signaux porteurs par un signal respectif d'une pluralité de signaux de données du premier ensemble de signaux porteurs.

**14.** Procédé pour former un signal de sortie multiporteuse pour une transmission dans un système de communication, le signal de sortie multiporteuse étant formé en modulant chacun de la pluralité de signaux porteurs de cet ensemble par un signal respectif de la pluralité de signaux de données, le procédé comprenant les étapes consistant à :

établir un ensemble de signaux porteurs ;
déterminer l'amplitude maximum du signal multiporteuse qui résulterait de la modulation de chacun de la pluralité de signaux porteurs de cet ensemble par un signal respectif de la pluralité de signaux de données ; et
si l'amplitude maximum déterminée est au-dessous d'un seuil prédéterminé, former le signal multiporteuse en modulant chacun de la pluralité de signaux porteurs de cet ensemble par un signal respectif de la pluralité de signaux de données, sinon
modifier la phase d'au moins un des signaux porteurs de l'ensemble, et former le signal multiporteuse en modulant chacun de la pluralité de signaux porteurs de cet ensemble par un signal respectif de la pluralité de signaux de données, dont le au moins un signal porteur ayant une phase altérée.

## Figure 1

PAE125W_1.93GHz

PAE125W_1.93GHz

## Figure 2

$(d_{3i}, d_{3i+1}, d_{3i+2}) =$

Figure 3

3pi/8 rotation

Figure 4

Figure 5

Figure 6

Cumulative probability of 4 carrier EDGE and PAR reduced 4 carrier EDGE - search100

Figure 7